# EUROPEAN PATENT SPECIFICATION

(11) **EP 3 005 855 B1**
(45) Date of publication and mention of the grant of the patent: **07.06.2017**
(21) Application number: 14187807.4
(22) Date of filing: 06.10.2014
(51) Int. Cl.: A01F 15/07, A01F 15/10

(54) **A round baler**
Rundballenpresse
Roto-presse

(43) Date of publication of application: 13.04.2016
(73) Proprietor: Kverneland Group Ravenna S.r.l., 48026 Russi (RA) (IT)
(72) Inventor: Seamus, Varley, Dublin (IE)
(74) Representative: Bittner, Thomas L.

(56) References cited:
- EP-A1- 2 220 929
- WO-A1-2013/014291
- US-A1- 2005 262 822

## Description

The present disclosure refers to a round baler for forming a bale from a crop product.

### Background

A round baler which may also be referred to as round baling apparatus usually comprises a feeding rotor and a scarper unit. The scraper unit is located around the top of the rotors circumference to prevent the crop from wrapping over the top of the feeding rotor and as a result the crop does not enter the baling chamber. A non-stop round baling apparatus comprising such means is disclosed in the document WO 2013 / 014291 A1. Covering means providing coverage of cutting means are rotatably seated. A main arm of the covering means is rotatably attached to a central axis of the cutting means. The main arm of the covering means optionally may be provided with a number of cleaning fingers fixed to the main arm and moving through the cutting means while the cutting means are rotated in operation of the round baler. The cleaning fingers act to clean the cutting means.

Another round baler of the non-stop type is disclosed in the document EP 2 220 929 A1. A main feeder is formed as a cutting device with a rotor, being driven about a horizontal axis transverse to the driving direction of the round baler. Said rotor has carriers extending radially for pushing the crop, whereas the carriers cooperate with knives and downstream strippers by rotating through gaps between pairs of them. The downstream strippers are movable on an arc together with a cover.

### Summary

It is an object to provide a round baler for forming a bale from a crop product with improved operation functionality.

According to an aspect of the present disclosure, a round baler for forming a bale from a crop product is provided. The round baler comprises a first bale forming chamber provided with a first bale forming mechanism, and a second bale forming chamber provided with a second bale forming mechanism. A working unit is provided, comprising a rotor rotatable around a rotor axis of a cutting mechanism and / or feeding mechanism. A scraper unit of the round baler comprises a scraper working tool functionally assigned to the cutting mechanism and / or the feeding mechanism. A transfer mechanism is adapted to transfer a partially formed bale from the first bale forming chamber into the second bale forming chamber and comprising a transfer working tool. The scraper working tool and the transfer working tool are movable on an arc of a circle the centre of which is provided by the rotor axis, such movement of the scraper working tool and the transfer working tool being decoupled from each other as well as from rotation of the rotor of the working unit.

The round baler may be non-stop round baling apparatus.

The scraper working tool may be configured to scrape / clean the cutting mechanism and / or the feeding mechanism, e.g. by moving through one or both mechanisms.

Movement of the scraper working tool and the transfer working tool is decoupled and driven independently of positively driven rotation of the rotor.

The scraper unit as whole may movable on an arc of a circle the center of which is provided by the rotor axis. In addition or as an alternative, the transfer mechanism as whole is movable on an arc of a circle the center of which is provided by the rotor axis.

The scraper working tool and / or the transfer working tool may connect to a driving unit adapted to apply a driving force the scraper working tool and / or the transfer working tool independent of a driving force applied to the rotor. There may be separated driving units providing the driving force to the scraper working tool and the transfer working tool, respectively. The one or more driving units may be adapted to drive the scraper unit as whole and / or the transfer mechanism as whole.

At least the scraper working tool may be rotatable received on a bearing may be fixed to a chamber wall. The scraper unit as whole may be rotatable received on the bearing fixed to a chamber wall.

At least the transfer working tool may be rotatable received on a further bearing fixed to the chamber wall. The transfer mechanism as whole providing for a functional unit may be rotatable received on the bearing fixed to a chamber wall.

The bearing and the further bearing may be located on opposite sides of the chamber wall. The bearing and the further bearing may be fixed to opposite sides of the chamber wall. A chamber wall section may be provided in between the bearing and the further bearing. The further bearing carrying the scraper working tool or the scraper unit as whole may be fixed to the chamber wall inside. The bearing carrying at least the transfer working tool or the transfer mechanism as whole may be fixed to the chamber wall outside. One or more chamber wall sections to which at least the scraper working tool and / or at least the transfer working tool are fixed may functionally assigned, e.g. by providing a side wall section, to at least one of the first and second bale forming chamber. The bearings and the further bearing may be fixed together one of the bearings provided on each side of the chamber wall.

At least one of the bearing and the further bearing may comprise a pin-bushing structure.

At least one of the bearing and the further bearing may protrude inwards of a rotor tube of the rotor. In case both the bearing and the further bearing protrude inwards of a rotor tube, the bearing and the further bearing may extend from opposite directions, e.g. from opposite end sections of the rotor tube. A bearing section protruding inwards of the rotor tube may be concealed in the rotor tube.

The at least one of the bearing and the further bearing, with regard to an inner wall of the rotor tube, may extend contact free inside of the rotor tube. The section protruding inwards of the rotor tube is extending free of physical contact with at least the rotor tube (or even the rotor as whole). An outer diameter of the bearing section protruding inwards is smaller than a inner diameter of the rotor tube.

The first bale forming mechanism and the second bale forming chamber may be adapted to form a pre-bale having a fixed pre-size and a final bale having fixed final size, respectively. The fixed pre-size is smaller than the final size, e.g. with regard to a bale diameter.

Following further aspects of the round baler are described.

The round baler may be provided with chamber walls and in between the chamber walls a feeding and / or cutting mechanism, a scraper unit rotatable around and over the feeding and / or cutting mechanism and a prechamber transfer mechanism also rotatable around and over the center of the feeding and / or cutting mechanism, both of the mechanisms are allowed to take an independent rotatable path around a defined radius/ circumference from the center of the feeding and / or cutting mechanism, while also rotating independently from the PTO (Power Take Off - drive line from the tractor) driven rotation of the rotor and therefore not adding an additional rotational frictional load to the rotation of the feeding rotor. Both mechanisms take a rotational path over the top or beyond the circumference path of the outer radius of the feeding and / or cutting mechanism.

The different mechanisms may rotate around and distribute their weight and rotational frictional force on a standard traditional bushing and pin type design. The mechanisms may alternatively rotate and distribute their forces on a ring bearing, or slew ring bearing design.

In the pin and bushing type design, the pin may have a hollow center designed to cater for the feeding mechanism's shaft and bearing to be seated in the center of the hollowed out pin. So the hollow pin in question is effectively a tube with a wall thickness and has a hollow space extending from the internal diameter of the tube wall to the center of the tube.

The rotatable mechanisms may apply their forces to the pin-bushing, and the pin-bushing may translate these axial and torsional forces into the chamber walls. The mechanisms may be mounted on pin-bushings on either side of the chamber walls. Therefore the forces from the mechanisms may be divided in a ratio on each side of the chamber wall. Due to the forces being applied on each side of the chamber walls, for each of the chamber walls, the geometry of applied forces dictates that the forces mainly act in an equal manner on the chambers wall therefore avoiding a cantilever twisting force being applied to the chambers wall.

The pin-bushing design may also allow the rotatable mechanisms be aligned each way in a horizontal direction. The pin-bushing design used in this situation for the rotatable mechanisms may allow the scraper unit and the prechamber transfer mechanism to be positioned relative to the chamber walls on the left and right sides, and the chamber walls may also dictate the position of the rotor or cutting mechanism so advantageously by relating the geometric position of the rotor and the mechanisms to the chamber walls, it means a greater accuracy may be achieved during assembly

Advantages of the round baler in its different embodiments may relate to the multiple mechanisms / components rotating around and over the center of the cutting rotor, around their own independent guided paths, separate from the drive shaft of the rotor. Additionally the scraper unit and the transfer mechanism may rotate independently from the PTO driven rotation of the rotor and therefore not adding an additional rotational frictional load to the rotation of the feeding rotor. This independent rotation and loading may be achieved by directing the dead and imposed loads of the scraper and transfer mechanism and the imposed weight of the prechamaber bale back through large external bushings fixed to the baler's chamber walls.

External bushings - meaning the mechanisms may make frictional contact with the bushing outside of the diameter of the feeding mechanisms shaft. Also, the mechanisms may be spaced apart and divided in the middle by the chamber wall, meaning there may be two bushings fixed together one each side of the chamber wall therefore the axial load is balanced in a vertical direction due to a vertical load being applied each side of the chamber wall and therefore avoiding a twisting, torsional loading effect on the chamber wall. If the mechanisms are attached on either the inside or outside of the chamber walls on each of the two (opposite) chamber walls, there could be a natural cantilever loading affecting the chamber walls in which the bushings were bolted / fixed to and the mechanisms were bearing on. Also this type of loading may affect the uneven wearing of the bushings in question.

An additional advantage of pin-bushings for the rotatable mechanisms to rotate on may be the large surface area of the effective contact area of the bushings being of a relative large surface area due to the pin-bushings large diameter. This large surface area ratio to weight of the mechanisms may ensure a more stable transfer of the rotatable mechanisms weight into the bushings and also a much longer working lifetime due to this contact surface area to weight ratio of the bushings and mechanisms.

### Description of further embodiments

Following, further embodiments are described. Reference is made to figures showing:
- Fig. 1: a side view a round baler of the non-stop type,
- Fig. 2: a perspective view of the round baler in Fig. 1,
- Fig. 3: an isometric view of an assembly of the round baler in Fig. 1 showing a working unit provided with a rotor rotatable around a rotor axis of a cutting mechanism and / or feeding mechanism, a transfer mechanism and a scraper unit, the rotor axis located between opposite chamber walls and the rotatable scarper unit shown on the inside of the chamber walls,
- Fig. 4: a partial front view of the assembly in Fig. 3,
- Fig. 5: a section of the left hand side assembly of the rotor, the scarper unit, the transfer mechanism and the chamber wall, showing the bushing fixed back to back each side of the chamber wall,

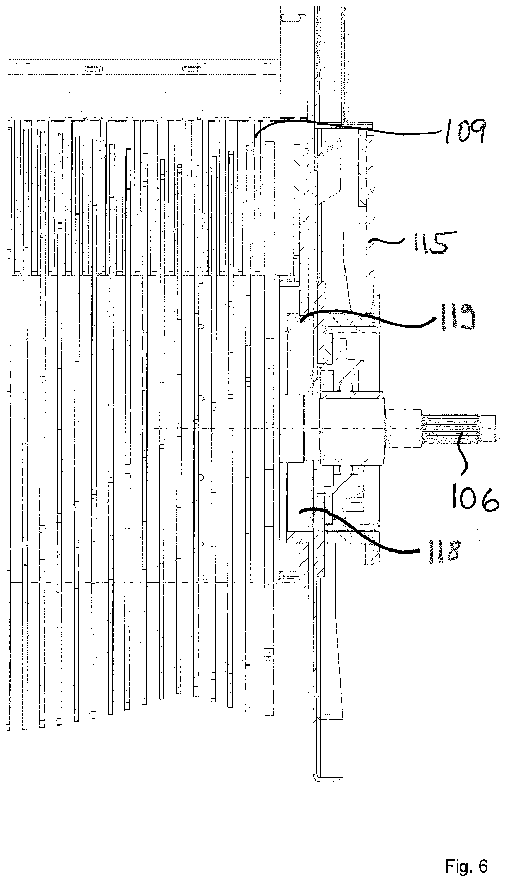

- Fig. 6: a full section of the left hand side assembly in Fig. 5, and

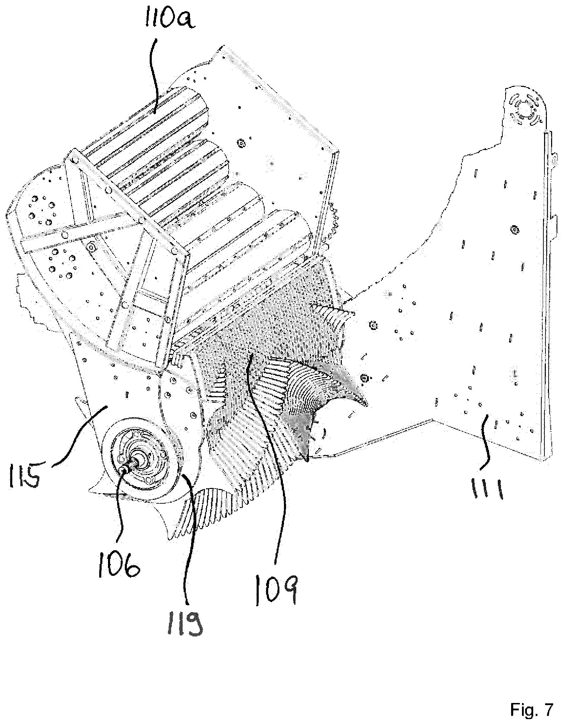

- Fig. 7: an isometric view of an assembly of the round baler in Fig. 1 showing the rotor, the transfer mechanism and the scraper unit and the chamber walls and there relative locations to the assembly.

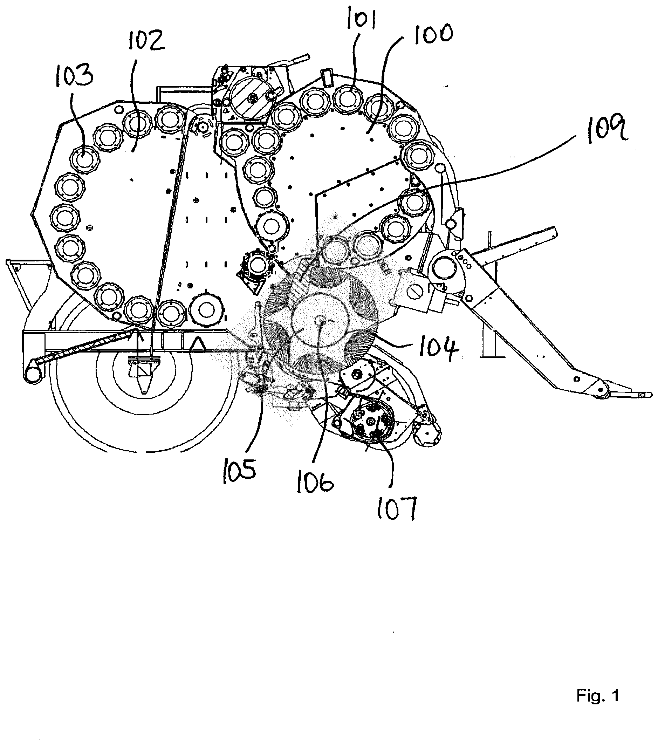

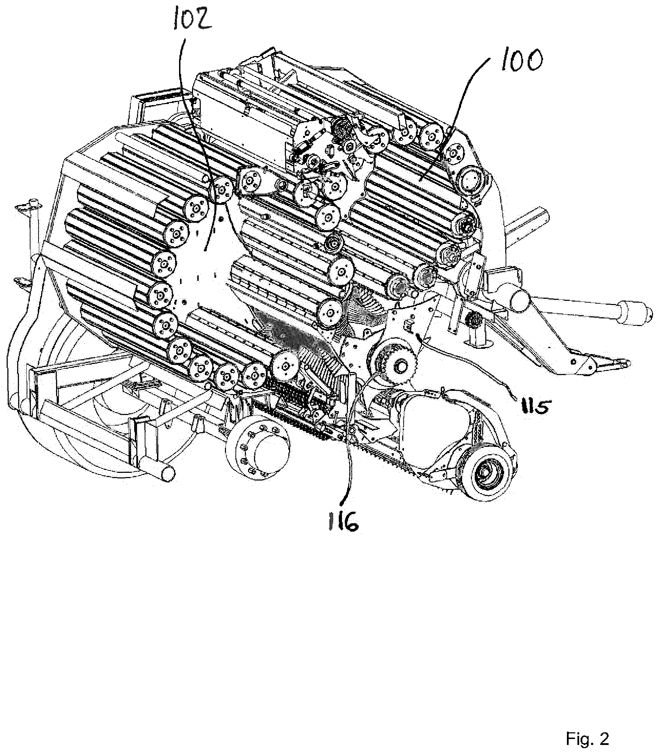

Referring to Fig. 1 and 2, a side view a round baler is shown. The round baler is of the non-stop type provided with a first bale forming chamber 100 provided with a first bale forming mechanism 101, and a second bale forming chamber 102 provided with a second bale forming mechanism 103. A working unit 104 is provided, comprising a rotor 105 rotatable around a rotor axis 106 of a cutting mechanism and / or feeding mechanism 107.

A scraper unit 108 of the round baler comprises a scraper working tool 109 functionally assigned to the cutting mechanism and / or the feeding mechanism 107. A transfer mechanism 110 is adapted to transfer a partially formed bale from the first bale forming chamber 100 into the second bale forming chamber 102 and comprising a transfer working tool 110a. The scraper working tool 109 and the transfer working tool 110a are movable on an arc of a circle the centre of which is provided by the rotor axis 106, such movement of the scraper working tool 109 and the transfer working tool 110a being decoupled from each other as well as from rotation of the rotor 105 of the working unit 104.

Fig. 2 shows a perspective view of the round baler in Fig. 1.

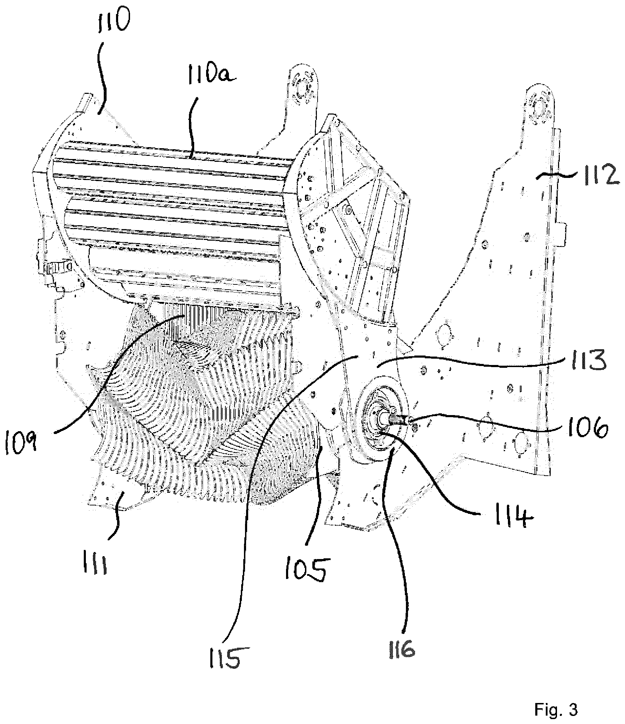

Fig. 3 shows an isometric view of an assembly of the round baler in Fig. 1. The working unit 104 provided with the rotor 105 rotatable around the rotor axis 106 of the cutting mechanism and / or feeding mechanism 107, the transfer mechanism 110 should be and the scraper unit 108 are depicted. The rotor axis 106 is located between opposite chamber walls 111, 112, and the rotatable scarper unit 108 is located on the inside of the chamber walls 111, 112.

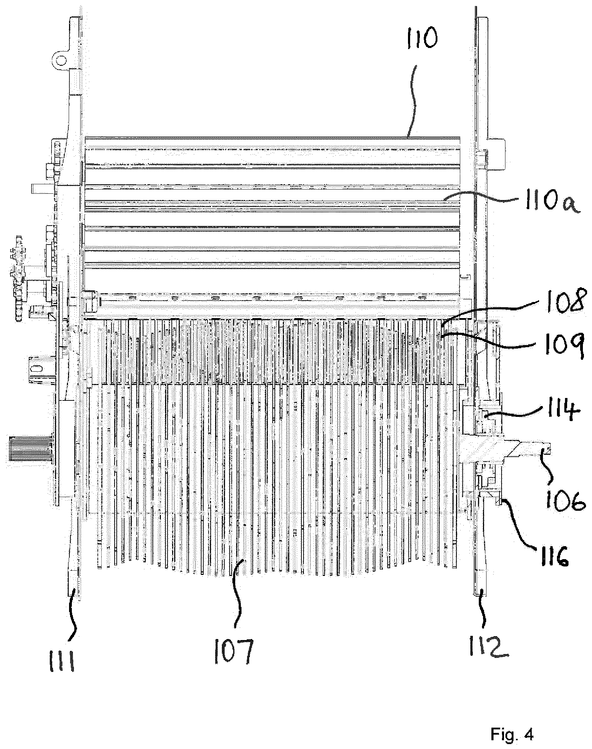

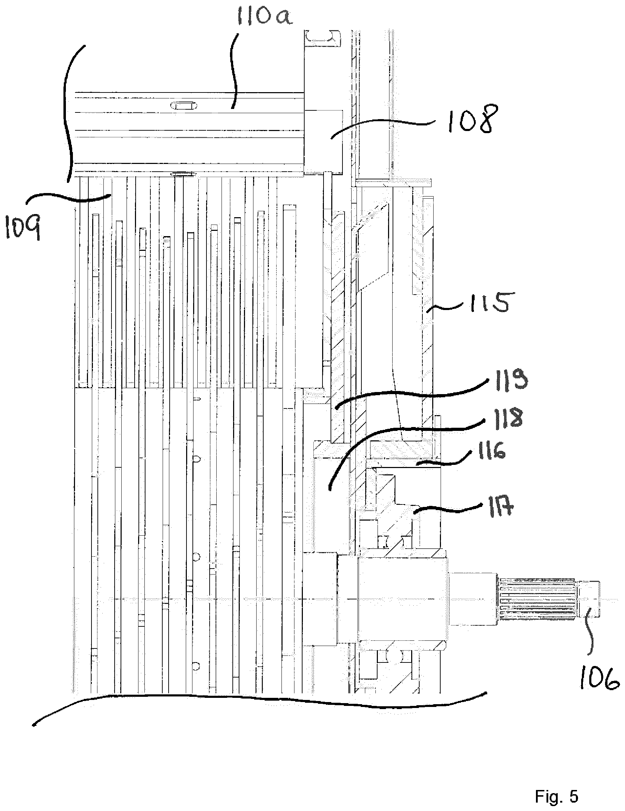

Fig. 4, there is a partial front view of the assembly of the mechanisms in question. The number 100 again denotes the overall mechanism and the associated components that are assembled left and right of the rotors perimeter and are seated over the top of the rotor / cutting and / or feeding means 110.
The chamber walls 111, 112 form part of a supporting structure 113 for the cutting mechanism and / or feeding mechanism 107 and also distributes the loads transmitted through the rotatable elements onto external bushings 114 and back into the chamber wall 111, 112 through bolting or some other fixed means. One of the rotatable elements being the transfer mechanism 110 which has a preferably bolted connection to a supporting rotating structure 115, the supporting rotating structure 115 has a ring or bushing incorporated into its end. In a pin and bushing detail, the supporting rotating structure 115 may constitute the bushing and a component 116 would constitute the pin. To assemble, the supporting rotating structure 115 is aligned to the component 116 and the component 116 is pushed into a rotor bearing 117. This detail is a mirror image on the opposite side. The rotor bearing 117 is pushed on over the shaft of the rotor 105 and the bolts are fixed through the component 116 "the pin" and through the chamber wall 111, 112 and screwed to the nuts attached to a bearing component 118 "the pin" components for the scraper pivoting point.
Referring to Fig. 5, the scraper unit 108 is located on the inside of the chamber walls 111, 112 in this embodiment. The scraper unit 108 is attached to a bushing unit 119. "The pin" part of the pivot point is the bearing component 118. This bearing component 118 has nuts attached to the inside of the assembly and this enables the entire assembly to be bolted together back to back through the chamber walls 111, 112.

Assembly methodology with the parts may be as follows:
- The rotor 105 sits away from the chamber walls 111, 112 ready to be assembled. The bushing unit 119 and the bearing component 118 are fitted together as a pin and bush assembly. These components are pushed onto the shaft of the rotor 105 on the left and right hand sides in a temporary state. They temporarily sit bear on the rotors shaft
- The scraper unit 108 is then bolted to the bushing unit 119 and sits in a temporary position over the rotor tines.
- The rotor 105 and the associated components as in points 1 and 2 are fitted into the zone between the chamber walls 111, 112.
- Components 115, 116, and 118 are assembled and pushed on over the rotor shaft on the outside.
- The bearing component 118 is pushed onto the rotor shaft and into a "pin housing" 120.
- The "pin housing" 116, the bearing component 118, the chamber wall 111, the scraper "pin" pivot point are all clamped and squeezed together by bolting.
- Components of the prechamber transfer mechanism 110 are then aligned and bolted together in the embodiment.

In this embodiment the scraper unit 108 rotates around and over the center of the cutting mechanism and / or the feeding mechanism 107 pivoting on the inside of the chamber walls 111, 112, and the transfer mechanism 110 rotates around and over the center of the cutting mechanism and / or the feeding mechanism 107 on the outside of the chamber walls 111, 112. This arrangement of the scraper unit 108 and the transfer mechanism 110 could be positioned in the opposite arrangement allowing the scarper unit 108 to be outside the chamber wall 111, 112 and the prechamber transfer unit rotating on the inside of the chamber wall 111, 112.

Also it should be understood, that in the embodiment described, there are two components rotating around the center of the cutting mechanism and / or the feeding mechanism 107 but with similar arrangements of the "pin and bushing" type arrangement / design, the number of components rotating in this manner may not be limited to two but have a value of less than two or more than two components depending on the requirements of the design.

## Claims

1. A round baler for forming a bale from a crop product, comprising
- a first bale forming chamber (100) provided with a first bale forming mechanism (101),
- a second bale forming chamber (102) provided with a second bale forming mechanism (103),
- a working unit (104), comprising a rotor (105) rotatable around a rotor axis (106) of a cutting mechanism and / or feeding mechanism (107),
- a scraper unit (108), comprising a scraper working tool (109) functionally assigned to the cutting mechanism and / or the feeding mechanism (107), and
- a transfer mechanism (110) adapted to transfer a partially formed bale from the first bale forming chamber into (100) the second bale forming chamber (102) and comprising a transfer working tool (110a),
**characterized in that** the scraper working tool (109) and the transfer working tool (110a) are movable on an arc of a circle the center of which is provided by the rotor axis (106), such movement of the scraper working tool (109) and the transfer working tool (110a) being decoupled from each other as well as from rotation of the rotor (105) of the working unit (104).

2. Round baler according to claim 1, **wherein** the scraper unit (108) as whole is movable on an arc of a circle the center of which is provided by the rotor axis (106).

3. Round baler according to claim 1 or 2, **wherein** the transfer mechanism (110) as whole is movable on an arc of a circle the center of which is provided by the rotor axis (106).

4. Round baler according to any claim of the preceding claims, wherein the scraper working tool (109) and / or the transfer working tool (110a) connect to a driving unit adapted to apply a driving force to the scraper working tool (109) and / or the transfer working tool (110a) independent of a driving force applied to the rotor (105).

5. Round baler according to any claim of the preceding claims, wherein at least the scraper working tool (109) is rotatable received on a bearing fixed to a chamber wall (111; 112).

6. Round baler according to claim 5, wherein the scraper unit (108) as whole is rotatable received on the bearing fixed to a chamber wall (111; 112).

7. Round baler according to any claim of the preceding claims, wherein at least the transfer working tool (110a) is rotatable received on a further bearing fixed to the chamber wall (111; 112).

8. Round baler according to claim 7, **wherein** the transfer mechanism (110) as whole is rotatable received on the bearing fixed to a chamber wall (111; 112).

9. Round baler according to any claim of the claims 5 to 8, **wherein** the bearing and the further bearing are located on opposite sides of the chamber wall (111; 112).

10. Round baler according to any claim of the claims 5 to 9, **wherein** at least one of the bearing and the further bearing comprises a pin-bushing structure (118, 119).

11. Round baler according to any claim of the claims 5 to 10, **wherein** at least one of the bearing and the further bearing protrudes inwards of a rotor tube of the rotor (105).

12. Round baler according to claim 11, **wherein** the at least one of the bearing and the further bearing, with regard to an inner wall of the rotor tube, is protruding contact free inside of the rotor tube.

13. Round baler according to any claim of the preceding claims, **wherein** the first bale forming mechanism (101) and the second bale forming chamber (103) are adapted to form a pre-bale having a fixed pre-size and a final bale having fixed final size, respectively.

## Patentansprüche

1. Rundballenpresse zum Formen eines Ballens aus einem Ernteprodukt mit:
- einer ersten Ballenformungskammer (100), die mit einem ersten Ballenformungsmechanismus (101) ausgestattet ist,
- einer zweiten Ballenformungskammer (102), die mit einem zweiten Ballenformungsmechanismus (103) ausgestattet ist,
- einer Bearbeitungseinheit (104), die einen Rotor (105) aufweist, der um eine Rotorachse (106) eines Schneidmechanismus und/oder Zuführungsmechanismus (107) drehbar ist,
- einer Abstreifeinheit (108), die ein Abstreifarbeitswerkzeug (109) aufweist, das funktionell dem Schneidmechanismus und/oder dem Zuführungsmechanismus (107) zugeordnet ist,
- einem Fördermechanismus (110), der eingerichtet ist, einen teilweise geformten Ballen von der ersten Ballenformungskammer (100) in die zweite Ballenformungskammer (102) zu befördern, und der ein Förderarbeitswerkzeug (110a) aufweist,
**dadurch gekennzeichnet, dass** das Abstreifarbeitswerkzeug (109) und das Förderarbeitswerkzeug (110a) auf einem Bogen eines Kreises bewegbar sind, dessen Zentrum durch die Rotorachse (106) derart gebildet ist, dass die Bewegung des Abstreifarbeitswerkzeugs (109) und des Förderarbeitswerkzeugs (110a) sowohl voneinander als auch von der Rotation des Rotors (105) der Bearbeitungseinheit (104) entkoppelt ist.

2. Rundballenpresse nach Anspruch 1, wobei die Abstreifeinheit (108) als Ganzes auf einem Bogen eines Kreises bewegbar ist, dessen Zentrum durch die Rotorachse (106) gebildet ist.

3. Rundballenpresse nach Anspruch 1 oder 2, wobei der Fördermechanismus (110) als Ganzes auf einem Bogen eines Kreises bewegbar ist, dessen Zentrum durch die Rotorachse (106) gebildet ist.

4. Rundballenpresse nach einem der vorhergehenden Ansprüche, wobei das Abstreifarbeitswerkzeug (109) und/oder das Förderarbeitswerkzeug (110a) an eine Antriebseinheit angeschlossen sind, die eingerichtet ist, eine Antriebskraft auf das Abstreifarbeitswerkzeug (109) und/oder das Förderarbeitswerkzeug (110a) auszuüben, die von einer auf den Rotor (105) ausgeübten Antriebskraft unabhängig ist.

5. Rundballenpresse nach einem der vorhergehenden Ansprüche, wobei mindestens das Abstreifarbeitswerkzeug (109) drehbar auf einem Lager aufgenommen ist, das an einer Kammerwand (111; 112) befestigt ist.

6. Rundballenpresse nach Anspruch 5, wobei die Abstreifeinheit (108) als Ganzes drehbar auf dem Lager aufgenommen ist, das an einer Kammerwand (111; 112) befestigt ist.

7. Rundballenpresse nach einem der vorhergehenden Ansprüche, wobei mindestens das Förderarbeitswerkzeug (110a) drehbar auf einem weiteren Lager aufgenommen ist, das an einer Kammerwand (111; 112) befestigt ist.

8. Rundballenpresse nach Anspruch 7, wobei der Fördermechanismus (110) als Ganzes drehbar auf dem Lager aufgenommen ist, das an einer Kammerwand (111; 112) befestigt ist.

9. Rundballenpresse nach einem der Ansprüche 5 bis 8, wobei das Lager und das weitere Lager auf gegenüberliegenden Seiten der Kammerwand (111; 112) angeordnet sind.

10. Rundballenpresse nach einem der Ansprüche 5 bis 9, wobei das Lager und / oder das weitere Lager eine Steckhülsenkonstruktion (118, 119) aufweist.

11. Rundballenpresse nach einem der Ansprüche 5 bis 10, wobei das Lager und / oder das weitere Lager nach innen in ein Rotorrohr des Rotors (105) hineinragt.

12. Rundballenpresse nach Anspruch 11, wobei das Lager und / oder das weitere Lager bezüglich einer Innenwand des Rotorrohrs kontaktfrei nach innen in das Rotorrohr hineinragt.

13. Rundballenpresse nach einem der vorhergehenden Ansprüche, wobei die erste Ballenformungskammer (101) und die zweite Ballenformungskammer (103) eingerichtet sind, einen Vorstufenballen mit einer festgelegten vorläufigen Größe bzw. einen endgültigen Ballen mit einer festgelegten endgültigen Größe auszubilden.

## Revendications

1. Presse à balles rondes pour former une balle à partir d'un produit de récolte, comprenant :
- une première chambre de formation de balles (100) dotée d'un premier mécanisme de formation de balles (101),
- une deuxième chambre de formation de balles (102) dotée d'un deuxième mécanisme de formation de balles (103),
- une unité de travail (104) comprenant un rotor (105) pouvant tourner autour d'un axe de rotor (106) d'un mécanisme de coupe et/ou d'un mécanisme d'alimentation (107),
- une unité de raclage (108) comprenant un outil de travail de raclage (109) affecté fonctionnellement au mécanisme de coupe et/ou au mécanisme d'alimentation (107), et
- un mécanisme de transfert (101) adapté pour transférer une balle partiellement formée de la première chambre de formation de balles (100) vers la deuxième chambre de formation de balles (102) et comprenant un outil de travail de transfert (110a),
**caractérisée en ce que** l'outil de travail de raclage (109) et l'outil de travail de transfert (110a) sont mobiles sur un arc d'un cercle dont le centre est fourni par l'axe de rotor (106), de tels mouvements de l'outil de travail de raclage (109) et de l'outil de travail de transfert (110a) étant désolidarisés l'un de l'autre ainsi que de la rotation du rotor (105) de l'unité de travail (104).

2. Presse à balles rondes selon la revendication 1, dans laquelle l'unité de raclage (108) en tant que tout est mobile sur un arc d'un cercle dont le centre est fourni par l'axe de rotor (106).

3. Presse à balles rondes selon la revendication 1 ou 2, dans laquelle le mécanisme de transfert (110) en tant que tout est mobile sur un arc d'un cercle dont le centre est fourni par l'axe de rotor (106).

4. Presse à balles rondes selon l'une quelconque des revendications précédentes, dans laquelle l'outil de travail de raclage (109) et/ou l'outil de travail de transfert (110a) sont raccordés à une unité d'entraînement adaptée pour appliquer une force d'entraînement à l'outil de travail de raclage (109) et/ou à l'outil de travail de transfert (110a) indépendamment d'une force d'entraînement appliquée au rotor (105).

5. Presse à balles rondes selon l'une quelconque des revendications précédentes, dans laquelle au moins l'outil de travail de raclage (109) est réceptionné de façon rotative sur un palier fixé à une paroi de chambre (111 ; 112).

6. Presse à balles rondes selon la revendication 5, dans laquelle l'unité de raclage (108) en tant que tout est réceptionnée de façon rotative sur le palier fixé à une paroi de chambre (111 ; 112).

7. Presse à balles rondes selon l'une quelconque des revendications précédentes, dans laquelle au moins l'outil de travail de transfert (110a) est réceptionné de façon rotative sur un autre palier fixé à la paroi de chambre (111 ; 112).

8. Presse à balles rondes selon la revendication 7, dans laquelle le mécanisme de transfert (110) en tant que tout est réceptionné de façon rotative sur le palier fixé à une paroi de chambre (111 ; 112).

9. Presse à balles rondes selon l'une quelconque des revendications 5 à 8, dans laquelle le palier et l'autre palier sont situés sur des côtés opposés de la paroi de chambre (111 ; 112).

10. Presse à balles rondes selon l'une quelconque des revendications 5 à 9, dans laquelle au moins l'un d'entre le palier et l'autre palier comprend une structure de coussinet d'axe (118, 119).

11. Presse à balles rondes selon l'une quelconque des revendications 5 à 10, dans laquelle au moins l'un d'entre le palier et l'autre palier est en saillie vers l'intérieur d'un tube de rotor du rotor (105).

12. Presse à balles rondes selon la revendication 11, dans laquelle, compte tenu d'une paroi intérieure du tube de rotor, l'au moins un d'entre le palier et l'autre palier est en saillie sans contact à l'intérieur du tube de rotor.

13. Presse à balles rondes selon l'une quelconque des revendications précédentes, dans laquelle le premier mécanisme de formation de balles (101) et le deuxième mécanisme de formation de balles (103) sont adaptés pour former respectivement une balle préalable ayant une taille préalable fixée et une balle finale ayant une taille finale fixée.
